# EUROPÄISCHE PATENTSCHRIFT

(11) **EP 0 469 294 B1**
(45) Veröffentlichungstag und Bekanntmachung des Hinweises auf die Patenterteilung: **10.08.1994**
(21) Anmeldenummer: 91110517.9
(22) Anmeldetag: 26.06.1991
(51) Int. Cl.: B01D 53/34

(54) **Verfahren zur Entfernung von Ammoniak aus Gasen**
Process for eliminating ammonia from gases
Procédé pour éliminer l'ammoniac dans des gaz

(30) Priorität: 31.07.1990 DE 4024241
(43) Veröffentlichungstag der Anmeldung: 05.02.1992
(73) Patentinhaber: HOECHST AKTIENGESELLSCHAFT, 65926 Frankfurt am Main (DE)
(72) Erfinder: Staffel, Thomas, Dr., W-5030 Hürth (DE); Adrian, Renate, W-5030 Hürth (DE)

(56) Entgegenhaltungen:
- EP-A- 0 016 591
- EP-A- 0 377 476
- WORLD PATENTS INDEX Week 7807, Derwent Publications Ltd.,London, GB; AN 78-13477A & SU-A-446 467 (ALEKSEEV)

## Beschreibung

Die vorliegende Erfindung betrifft ein Verfahren zur Entfernung von Ammoniak aus wasserdampfhaltigen Gasen, welche bei der Herstellung von Amoniumpolyphosphat durch Umsetzung von Phosphorpentoxid und Diamoniumphosphat mit Ammoniakgas anfallen.

Bei der Herstellung von Ammoniumpolyphosphat durch Umsetzung von Phosphorpentoxid und Diammoniumphosphat mit Ammoniakgas, beispielsweise nach dem Verfahren gemäß der US-A- 3 978 195, ist es erforderlich, nicht nur in der Reaktionsphase sondern auch während der Temperphase im Reaktor die Ammoniakatmosphäre aufrechtzuerhalten, da sonst thermische Zersetzung des Ammoniumpolyphosphates einsetzt. Während der Temperphase wird im Reaktor durch die fortschreitende Kondensation der Phosphatgruppen Wasserdampf freigesetzt, der zur Erzielung eines Ammoniumpolyphosphates hoher Qualität entfernt werden muß. Daher ist es von Wichtigkeit, auch während der Temperphase eine größere Menge Ammoniak durch den Reaktor hindurchzuleiten, obwohl der Ammoniak-Verbrauch in dieser Phase geringer ist als in der Reaktionsphase. Bislang werden die während der Temperphase aus dem Reaktor austretenden, mit Feuchtigkeit und Ammoniak beladenen Gase in Gegenstromwäschern absorbiert und die ammoniakhaltige Flüssigkeit einer biologischen Kläranlage zugeführt.

Dabei ist von Nachteil, daß der Betrieb einer biologischen Kläranlage durch größere Ammoniakmengen gestört wird.

Es ist daher Aufgabe der vorliegenden Erfindung, ein Verfahren zur Entfernung von Ammoniak aus wasserdampfhaltigen Gasen anzugeben, bei welchem das Ammoniak in wiederverwertbarer Form anfällt. Das wird erfindungsgemäß mit einem Verfahren gemäß Anspruch 1 erreicht.

Das erfindungsgemäße Verfahren kann weiterhin wahlweise auch noch dadurch ausgestaltet sein, daß
a) man die Ammoniak und Wasserdampf enthaltenden Gase in eine teilweise mit Polyphosphorsäure gefüllte Reaktionszone einführt, aus dem unteren Bereich der Reaktionszone kontinuierlich Polyphosphorsäure entnimmt und die entnommene Polyphosphorsäure auf eine Kolonne aufgibt, deren unteres Ende mit der Reaktionszone strömungsmäßig verbunden ist;
b) man die Ammoniak und Wasserdampf enthaltenden Gase mit einer Geschwindigkeit von 50 bis 200 l, vorzugsweise von 100 bis 150 l, je Stunde und l Polyphosphorsäure einführt;
c) man die Ammoniak und Wasserdampf enthaltenden Gase in die in einer durchrührten Reaktionszone befindliche Polyphosphorsäure einperlen läßt;
d) man die Ammoniak und Wasserdampf enthaltenden Gase mit einer Geschwindigkeit von 20 bis 80 l, vorzugsweise 40 bis 60 l, je Stunde und l Polyphosphorsäure einperlen läßt.

Beim Verfahren gemäß der Erfindung nimmt die Polyphosphorsäure sowohl das Ammoniak als auch den Wasserdampf vollständig auf.

Die beim erfindungsgemäßen Verfahren verwendete Polyphosphorsäure weist eine Dichte von 1,83 bis 2,06 g/cm³auf.

Die beim Verfahren gemäß der Erfindung anfallende, ammoniakgesättigte Polyphosphorsäure kann als eine Komponente zur Herstellung von Ammoniumpolyphosphat verwendet werden.

In der beigefügten Zeichnung sind Anlagen zur Durchführung des erfindungsgemäßen Verfahrens schematisch und im Schnitt dargestellt. Dabei zeigen
- Fig. 1: eine Absorptionsapparatur mit Umpumpeinrichtung
- Fig. 2: eine Absorptionsapparatur mit Rühreinrichtung.

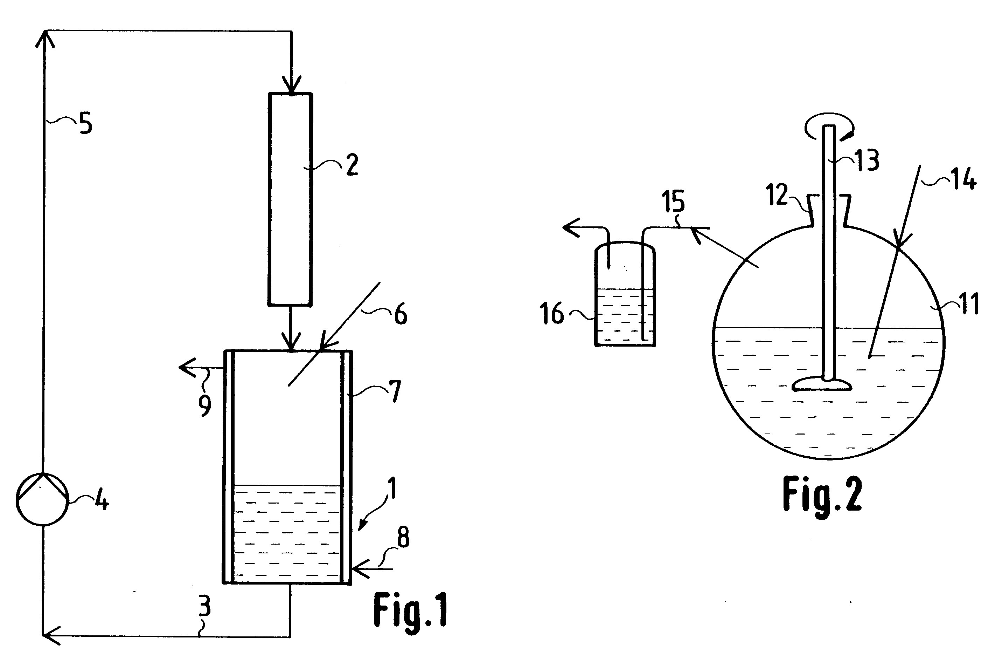

Gemäß Fig. 1 ist ein doppelwandiges Absorptionsgefäß 1 vorgesehen, oberhalb dessen eine Kolonne 2 angeordnet ist, welche mit dem Absorptionsgefäß 1 strömungsmäßig verbunden ist. Vom Boden des Absorptionsgefäßes 1 geht eine erste Leitung 3 ab, welche zu einer Pumpe 4 führt. Die Pumpe 4 ihrerseits ist über eine zweite Leitung 5 mit dem oberen Bereich der Kolonne 2 strömungsmäßig verbunden.
In das Absorptionsgefäß 1 ist ein Gaszuführungsrohr 6 eingeführt, während der zwischen der Doppelwand des Absorptionsgefäßes 1 ausgebildete Ringraum 7 über eine Zuleitung 8 bzw. eine Ableitung 9 mit einem Heizmedium beaufschlagbar ist.

Gemäß Fig. 2 ist ein Rundkolben 11 mit einem durch seinen mittleren Stutzen 12 hindurchgeführten Rührer 13 versehen. In den Rundkolben 11 ragt ein Gaszuführungsrohr 14 hinein. Vom Rundkolben 11 geht ein Gasableitungsrohr 15 ab, welches mit einer Waschflasche 16 strömungsmäßig verbunden ist.

Das erfindungsgemäße Verfahren wird durch die folgenden Beispiele erläutert.

### Beispiel 1

In das Absorptionsgefäß 1 (vergl. Fig. 1) wurden 2,3 kg Polyphosphorsäure (84 Gewichts% P₂O₅) eingefüllt. Als Kolonne 2 wurde eine Vigreux-Kolonne verwendet. Als Pumpe 4 diente eine Kolbenpumpe (Kolbendurchmesser: 16 mm; Hublänge: 10 mm) , welche mit 153 Hüben/min betrieben wurde. Durch den Ringraum 7 wurde von einem Thermostaten Silikonöl mit 160°C hindurchgeleitet. Dabei betrug die maximale Temperatur der umgepumpten Polyphosphorsäure bei einer Einleitungsgeschwindigkeit für das ammoniak- und wasserdampfhaltige Gas von 250 l/h 195°C. Nach Einleiten von 200 l Abgas stieg die Viskosität der Polyphosphorsäure stark an. Dadurch wurde ihre Pumpfähigkeit herabgesetzt. Damit endete die Möglichkeit, weitere Mengen Ammoniak und Wasserdampf in der Polyphosphorsäure zu absorbieren.

### Beispiel 2

Beispiel 1 wurde mit den Änderungen wiederholt, daß 2,25 kg Polyphosphorsäure in das Absorptionsgefäß 1 eingefüllt wurden und die Hublänge der Kolbenpumpe nur 5 mm betrug. Als maximale Temperatur der umgepumpten Polyphosphorsäure stellte sich bei einer Einleitungsgeschwindigkeit für das ammoniak- und wasserdampfhaltige Gas von 200 l/h 208°C ein. Die Pumpfähigkeit der Polyphosphorsäure wurde ebenfalls nach Einleiten von 200 l Abgas herabgesetzt.

### Beispiel 3

In das Absorptionsgefäß 11 (vergl. Fig. 2), welches sich in einem mit Silikonöl gefüllten und auf 160°C temperierten Thermostaten befand, wurden 2 kg Polyphosphorsäure (84 Gewichts% P₂O₅) eingefüllt. Die Geschwindigkeit des Rührers 13 wurde auf 430 Upm eingestellt. Bei einer Einleitungsgeschwindigkeit für das ammoniak- und wasserdampfhaltige Gas von 100 l/h wurde die maximale Temperatur der Polyphosphorsäure zu 208°C ermittelt. Nach Einleiten von 200 l Gas war die Absorptionsfähigkeit der Polyphosphorsäure erschöpft.

## Patentansprüche

1. Verfahren zur Entfernung von Ammoniak und Wasserdampf aus Gasen, welche bei der Herstellung von Ammoniumpolyphosphat durch Umsetzung von Phosphorpentoxid und Diammoniumphosphat mit Ammoniakgas anfallen, dadurch gekennzeichnet, daß man die Gase mit eine Temperatur von 120 bis 170 °C aufweisender Polyphosphorsäure mit einem P₂O₅-Gehalt von 76 bis 88 Gewichts% in intensiven Kontakt bringt.

2. Verfahren nach Anspruch 1, dadurch gekennzeichnet, daß die Polyphosphorsäure einen P₂O₅-Gehalt von 76 bis 84 Gewichts% aufweist.

3. Verfahren nach mindestens einem der Ansprüche 1 bis 2, dadurch gekennzeichnet, daß man die Ammoniak und Wasserdampf enthaltenden Gase in eine teilweise mit Polyphosphorsäure gefüllte Reaktionszone einführt, aus dem unteren Bereich der Reaktionszone kontinuierlich Polyphosphorsäure entnimmt und die entnommene Polyphosphorsäure auf eine Kolonne aufgibt, deren unteres Ende mit der Reaktionszone strömungsmäßig verbunden ist.

4. Verfahren nach Anspruch 3, dadurch gekennzeichnet, daß man die Ammoniak und Wasserdampf enthaltenden Gase mit einer Geschwindigkeit von 50 bis 200 l, vorzugsweise von 100 bis 150 l, je Stunde und l Polyphosphorsäure einführt.

5. Verfahren nach mindestens einem der Ansprüche 1 bis 2, dadurch gekennzeichnet, daß man die Ammoniak und Wasserdampf enthaltenden Gase in die in einer durchrührten Reaktionszone befindliche Polyphosphorsäure einperlen läßt.

6. Verfahren nach Anspruch 5, dadurch gekennzeichnet, daß man die Ammoniak und Wasserdampf enthaltenden Gase mit einer Geschwindigkeit von 20 bis 80 l, vorzugsweise 40 bis 60 l, je Stunde und l Polyphosphorsäure einperlen läßt.

## Claims

1. A process for the removal of ammonia and water vapor from gases formed in the preparation of ammonium polyphosphate by reaction of phosphorus pentoxide and diammonium phosphate with ammonia gas, which comprises bringing the gases into intimate contact with polyphosphoric acid having a P₂O₅ content of from 76 to 88% by weight and having a temperature of from 120 to 170°C.

2. The process as claimed in claim 1, wherein the polyphosphoric acid has a P₂O₅ content of from 76 to 84 % by weight.

3. The process as claimed in at least one of claims 1 and 2, wherein the ammonia- and water vapor-containing gases are introduced into a reaction zone which is partially filled with polyphosphoric acid, polyphosphoric acid is withdrawn continuously from the lower part of the reaction zone, and the polyphosphoric acid withdrawn is transferred to a column whose lower end is connected flow-wise to the reaction zone.

4. The process as claimed in claim 3, wherein the ammonia- and water vapor-containing gases are introduced at a rate of from 50 to 200 l, preferably from 100 to 150 l, per hour and per l of polyphosphoric acid.

5. The process as claimed in at least one of claims 1 to 2, wherein the ammonia- and water vapor-containing gases are allowed to bubble into the polyphosphoric acid which is located in a stirred reaction zone.

6. The process as claimed in claim 5, wherein the ammonia- and water vapor-containing gases are allowed to bubble in at a rate of from 20 to 80 l, preferably from 40 to 60 l, per hour and per l of polyphosphoric acid.

## Revendications

1. Procédé pour éliminer l'ammoniac et la vapeur d'eau des gaz formés à la fabrication du polyphosphate d'ammonium par réaction du pentoxyde de phosphore et du phosphate diammonique avec le gaz ammoniac, caractérisé en ce que l'on met ces gaz en contact intensif avec de l'acide polyphosphorique à une teneur en P₂O₅ de 76 à 88 % en poids à une température de 120 à 170°C.

2. Procédé selon la revendication 1, caractérisé en ce que l'acide polyphosphorique est à une teneur en P₂O₅ de 76 à 84 % en poids.

3. Procédé selon au moins une des revendications 1 et 2, caractérisé en ce que l'on envoie les gaz contenant l'ammoniac et la vapeur d'eau dans une zone de réaction garnie en partie d'acide polyphosphorique, on prélève en continu l'acide polyphosphorique de la région inférieure de la zone de réaction et on envoie l'acide polyphosphorique prélevé dans une colonne dont l'extrémité inférieure est reliée dans le sens de l'écoulement avec la zone de réaction.

4. Procédé selon la revendication 3, caractérisé en ce que l'on envoie les gaz contenant l'ammoniac et la vapeur d'eau à un débit de 50 à 200 l, de préférence de 100 à 150 l par heure et par litre d'acide polyphosphorique.

5. Procédé selon au moins une des revendications 1 et 2, caractérisé en ce que l'on fait barboter les gaz contenant l'ammoniac et la vapeur d'eau dans l'acide polyphosphorique qui se trouve dans une zone de réaction soumise à agitation.

6. Procédé selon la revendication 5, caractérisé en ce que l'on fait barboter les gaz contenant l'ammoniac et la vapeur d'eau à un débit de 20 à 80 l, de préférence de 40 à 60 l par heure et par litre d'acide polyphosphorique.
